# FASCICULE DE BREVET EUROPEEN

(11) **EP 2 978 784 B1**
(45) Date de publication et mention de la délivrance du brevet: **18.10.2017**
(21) Numéro de dépôt: 14716905.6
(22) Date de dépôt: 21.03.2014
(51) Int. Cl.: C08F 220/56

(54) **NOUVEAUX POLYMÈRES AMPHIPHILES ET LEUR UTILISATION DANS LE TRAITEMENT DE SURFACES DE MATÉRIAUX HYDROPHOBES**
NEUARTIGE AMPHIPHILE POLYMERE UND VERWENDUNG DAVON BEI DER BEHANDLUNG VON OBERFLÄCHEN AUS HYDROPHOBEN MATERIALIEN
NOVEL AMPHIPHILIC POLYMERS AND USE THEREOF IN THE TREATMENT OF SURFACES MADE OF HYDROPHOBIC MATERIALS

(30) Priorité: 25.03.2013 FR 1352642
(43) Date de publication de la demande: 03.02.2016
(73) Titulaire: Société d'Exploitation de Produits pour les Industries Chimiques SEPPIC, 75321 Paris cedex 07 (FR); Centre National de la Recherche Scientifique (C.N.R.S.), 75794 Paris Cedex 16 (FR); Institut Curie, 75005 Paris (FR); Université Pierre et Marie Curie (Paris 6), 75252 Paris Cedex 05 (FR)
(72) Inventeur: VIOVY, Jean-Louis, F-75005 Paris (FR); BRAUN, Olivier, 42330 Saint Bonnet les Oules (FR)
(74) Mandataire: Conan, Philippe Claude
(86) Numéro de dépôt international: PCT/FR2014/050662
(87) Numéro de publication internationale: WO 2014/154977

(56) Documents cités:
- WO-A1-2010/112753
- WO-A1-2011/030044
- WO-A1-2011/113470
- WO-A2-2008/087326
- WO-A2-2013/030499

## Description

L'invention concerne de nouveaux polymères, le procédé pour leur préparation et leur application dans le traitement de surfaces, notamment de surfaces en matériau plastique hydrophobe.

Des développements sont actuellement entrepris pour développer des applications telles que des tests médicaux, des analyses chimiques ou biologiques, ou des opérations de synthèse, dans des systèmes microfluidiques également dénommés laboratoires sur puces (lab on chip en langue anglaise).

Ces laboratoires sur puces sont constitués d'un matériau plastique hydrophobe, tels que le COC (cyclic olefin copolymer en langue anglaise), le COP (cyclic olefin polymer en langue anglaise), et plus généralement les poly(cyclo-oléfines), le PMMA (polymethylmethacrylate) et plus généralement les polymères acryliques, le polycarbonate, les polyesters, les silicones, certains polyuréthanes, et plus généralement toutes sortes de résines polymérisables à froid ou à chaud, de matériaux thermoformables.

Les matériaux de type COC, par exemple, sont peu denses, très transparents, biocompatibles, ont une résistance thermique jusqu'à 170°C ainsi qu'une bonne résistance aux produits chimiques.

Leur caractère hydrophobe induit cependant quelques inconvénients comme des interactions avec certaines molécules biologiques comme les protéines, des molécules organiques comme des colorants, marqueurs, drogues ou toute autre sorte de molécule qu'on pourrait souhaiter étudier ou préparer dans de tels laboratoires sur puces mais aussi avec des micro ou nanoparticules qui sont souvent utilisées comme support d'interaction dans ces laboratoires sur puce. Pour obvier à cet inconvénient, on traite la surface du matériau avec un polymère approprié qui peut être selon les cas neutre ou de nature cationique anionique ou ampholyte.

La demande brevet français publiée sous le numéro 2 810 905, divulgue un copolymère amphiphile en peigne, composé d'un squelette principal de poly(N,N-diméthyl acrylamide) et de greffons de poly(méthacrylate de méthyle). Ces motifs hydrophobes s'adsorbent sur le matériau de type COC et le squelette de poly(N,N-diméthyl acrylamide) donne à la surface du matériau un caractère hydrophile.

Or la synthèse industrielle d'un tel copolymère est difficile car elle passe par la préparation d'un macromère de méthacrylate de méthyle et la copolymérisation en phases solvants avec des étapes de purification.

De plus, comme dans la perspective du développement de la technique des laboratoires sur puces pour immobiliser des cellules, il peut être nécessaire de rendre la surface hydrophobe, légèrement cationique.

Les inventeurs se sont donc attachés à développer de nouveaux polymères qui permettent de résoudre les problèmes évoqués ci-dessus, ainsi qu'un procédé permettant de traiter et contrôler la surface de matériaux polymères, de microcanaux, ou de dispositifs microfluidiques

Selon un premier aspect, l'invention a pour objet un polymère linéaire, branché ou réticulé, comportant pour 100% molaire :
- a) une proportion molaire supérieure ou égale à 75% et inférieure ou égale à 99,95% d'unités monomériques issues d'un N,N-dialkyl acrylamide, les radicaux alkyle comportant chacun de 1 à 4 atomes carbone ;
- b) une proportion molaire supérieure ou égale à 0,05% et inférieure ou égale à 1%, d'unités monomériques issues d'un monomère de formule (I) :

   CH₂=C(R₁)-C(=O)-O-[(CH₂-CH(R₂)-O]ₙ-R₃ (I)

   dans laquelle n représente un nombre compris entre 1 et 50, R₁ représente un atome d'hydrogène ou un radical méthyle, R₂ représente un atome d'hydrogène, un radical méthyle ou un radical éthyle et R₃ représente un radical aliphatique hydrocarboné, linéaire ou ramifié, saturé ou insaturé, comprenant de 8 à 30 atomes de carbone, et
- c) optionnellement une proportion molaire supérieure à 0% et inférieure ou égale à 24%, soit d'unités monomériques issues d' un monomère comportant une fonction acide fort libre, partiellement ou totalement salifiée, soit, d'unités monomériques issues d'un monomère de formule (II) :

   CH₂=C(R₄)-C(=O)-Y-(CH₂)ₘ-N(R₅)(R₆) (II)

   dans laquelle m représente un nombre compris entre 1 et 4, Y représente O ou NH, R₄ représente un atome d'hydrogène ou un radical méthyle, R₅ et R₆ identiques ou différents représentent un radical méthyle ou un radical éthyle, et
d) optionnellement une proportion molaire supérieure à 0% et inférieure ou égale à 1% d'un monomère de réticulation diéthylénique ou polyéthylénique.

Par polymère branché, on désigne un polymère non linéaire qui possède des chaînes pendantes de manière à obtenir, lorsqu'il est mis en solution dans l'eau, un fort état d'enchevêtrement conduisant à des viscosités, à bas gradient de vitesse, très importantes.

Par polymère réticulé, on désigne un polymère non linéaire se présentant à l'état de réseau tridimensionnel insoluble dans l'eau, mais gonflable à l'eau et conduisant donc à l'obtention d'un gel chimique.

Le polymère obtenu par le procédé selon l'invention peut comporter des motifs réticulés et/ou des motifs branchés.

Selon un aspect particulier, l'invention a pour objet le polymère tel que défini précédemment, dans lequel les unités monomériques issues du N,N-dialkyl acrylamide, sont issues du N,N-diméthyl acrylamide (dénommé ci-après DMAM) ou du N,N-diéthyl acrylamide (dénommé ci-après DEAM).

Dans le cadre de la présente invention, le monomère de formule (I) approprié à la préparation du polymère objet de la présente invention est tensioactif. Il doit posséder une chaine suffisamment hydrophobe pour pouvoir s'adsorber sur un support hydrophobe et une partie suffisamment hydrophile apte à interagir avec les molécules biologiques de façon attractive ou répulsive selon les besoins.

Dans la formule (I) telle que définie précédemment, le radical divalent :

-[(CH₂-CH(R₂)-O]ₘ-

représente notamment :
- Soit une chaîne composée uniquement de groupes éthoxyle (R₂ = H ; m >0),
- Soit une chaîne composée uniquement de groupes propoxyle (R₂ = CH₃ m > 0),
- Soit une chaîne composée uniquement de groupes butoxyle (R₂ = C₂H₅ ; m > 0),
- Soit une chaîne composée d'au moins deux groupes différents choisis parmi les groupes éthoxyle, propoxyle et/ou butoxyle.

Lorsque cette chaîne est composée de groupes différents, ils sont distribués tout au long de cette chaîne, de façon séquencée ou aléatoire.

Par radical aliphatique, hydrocarboné linéaire, saturé ou insaturé, comprenant de 8 à 30 atomes de carbone, on désigne plus particulièrement pour R₃, dans la formule (I) telle que définie précédemment :
- Soit un radical dérivé des alcools primaires linéaires tels que par exemple, ceux dérivés des alcools octylique, pélargonique, décylique, undécylique, undécénylique, laurique, tridécylique, myristylique, pentadécylique, cétylique, heptadécylique, stéarylique, oléylique, linoléylique, nonadécylique, arachidylique, béhénylique, érucylique ou du 1-triacontanol. Il s'agit alors des radicaux octyle, nonyle, décyle, undécyle, 10-undécènyle, dodécyle, tridécyle, tétradécyle, pentadécyle, hexadécyle, heptadécyle, octadécyle, 9-octadécènyle, 10,12-octadécadiènyle, nonadécyle, eicosyle, docosyle, 13-docosènyle ou triacontyle ;
- Soit un radical dérivé des alcools de Guerbet, qui sont des 1-alcanols ramifiés répondant à la formule générale :

   CH₃-(CH₂)ₚ-CH[CH₃-(CH₂)ₚ₋₂]-CH₂OH,

   Dans laquelle p représente un nombre entier compris entre 2 et 14, tels que, par exemple, les radicaux 2-éthyl hexyle, 2-propyl heptyle, 2-butyl octyle, 2-pentyl nonyle, 2-hexyl décyle ou 2-octyl dodécyle ;
- Soit un radical dérivé des iso-alcanols répondant à la formule générale :

   CH₃-CH(CH₃)-(CH₂)_{q}-CH₂OH,

   Dans laquelle q représente un nombre entier compris entre 2 et 26 tels que, par exemple, les radicaux 4-méthyl pentyle, 5-méthyl hexyle, 6-méthyl heptyle, 15-méthyl pendadécyle ou 16-méthyl heptadécyle ;
- Soit les radicaux 2-hexyl octyle, 2-octyl décyle ou 2-hexyl dodécyle.

Par radical aliphatique hydrocarboné, linéaire ou ramifié, saturé ou insaturé, comprenant de 8 à 30 atomes de carbone, on désigne plus particulièrement pour R₃, dans la formule (I) telle que définie précédemment, un radical alkyle comportant de 12 à 22 atomes de carbone.

Dans la formule (I) telle que définie précédemment, n représente plus particulièrement un nombre compris entre 4 et 25.

L'invention a tout particulièrement pour objet le polymère tel que défini précédemment, dans lequel les unités monomériques issues du monomère de formule (I) sont issues :
- Du méthacrylate de béhènyle pentacosa-éthoxylé, composé de formule (I) telle que définie précédemment, dans laquelle R₁ représente le radical méthyle, R₂ représente un atome d'hydrogène, R₃ représente le radical docosyle, et n est égal à 25 [dénommé ci-après BEM-25(OE)] ;
   ou :
- Du méthacrylate de stéaryle eicosa-éthoxylé, composé de formule (I) telle que définie précédemment, dans laquelle R₁ représente le radical méthyle, R₂ représente un atome d'hydrogène R₃ représente le radical stéaryle et n est égal à 20 [dénommé ci-après MAS-20(OE)].

Par monomère comportant une fonction acide fort, on désigne dans le cadre de la présente invention, notamment un monomère acyclique comportant une fonction sulfonique ou une fonction phosphonique et moins une liaison carbone-carbone insaturée.

Lorsque la fonction acide fort est partiellement ou totalement salifiée, il s'agit plus particulièrement du sel de sodium, du sel de potassium ou du sel d'ammonium.

Selon un autre aspect particulier de la présente invention, le polymère tel que défini précédemment est caractérisé en ce que, lorsqu'il comporte des unités monomériques issues du monomère comportant une fonction acide fort libre, partiellement ou totalement salifiée, celles-ci sont issues de l'acide 2-méthyl 2-[(1-oxo 2-propènyl) amino] 1-propanesulfonique (dénommé ci-après ATBS), libre, partiellement ou totalement salifié.

Selon deux aspects particuliers de la présente invention, ledit polymère linéaire, branché ou réticulé tel que défini précédemment est caractérisé en ce que, lorsqu'il comporte des unités monomériques issues du monomère de formule (II), m est égal à 2 ou à 3 dans ladite formule (II) et/ou R₅ et R₆ représentent chacun un radical méthyle.

Selon ces aspects particuliers, le polymère tel que défini précédemment est caractérisé en ce que, lorsqu'il comporte des unités monomériques issues du monomère de formule (II), celles-ci sont issues du :
- Méthacrylate de diméthylamino éthyle (dénommé ci-après MADMAE), ou du
- N-[3-(diméthylamino propyl)] acrylamide (dénommé ci-après DMAPAA).

Selon un autre mode particulier de la présente invention, celle-ci a pour objet le polymère tel que défini précédemment, comportant pour 100% molaire :
- a) une proportion molaire supérieure ou égale à 99% et inférieure ou égale à 99,9% d'unités monomériques issues du N,N-dialkyl acrylamide ; et
- b) une proportion molaire supérieure ou égale à 0,1% et inférieure ou égale à 1 %, du monomère de formule (I') :

   CH₂=C(CH₃)-C(=O)-O-[(CH₂-CH₂-O]_{n'}-R'₃ (I')

   dans laquelle n' représente un nombre compris entre 4 et 25, et R₃ représente un alkyle linéaire ou ramifié, saturé ou insaturé, comprenant de 12 à 22 atomes de carbone.

L'invention a aussi plus particulièrement pour objet le polymère tel que défini précédemment, comportant pour 100% molaire :
- a) une proportion molaire supérieure ou égale à 80% et inférieure ou égale à 95%, d'unités monomériques issues du N,N-dialkyl acrylamide, les radicaux alkyle comportant chacun de 1 à 4 atomes carbone ;
- b) une proportion molaire supérieure ou égale à 0,1% et inférieure ou égale à 0,5%, d'unités monomériques du monomère de formule (I') :

   CH₂=C(CH₃)-C(=O)-O-[(CH₂-CH₂-O]_{n'}-R'₃ (I')

   dans laquelle n' représente un nombre compris entre 4 et 25, et R₃ représente un alkyle linéaire ou ramifié, saturé ou insaturé, comprenant de 12 à 22 atomes de carbone et
- c) une proportion molaire supérieure ou égale à 4% et inférieure ou égale à 19%, d'unités monomériques issues de l'acide 2-méthyl 2-[(1-oxo 2-propènyl) amino] 1-propanesulfonique, libre, partiellement ou totalement salifié ; et le polymère tel que défini précédemment, comportant pour 100% molaire :
- a) une proportion molaire supérieure ou égale à 80% et inférieure ou égale à 95%, d'unités monomériques issues du N,N-dialkyl acrylamide, les radicaux alkyle comportant chacun de 1 à 4 atomes carbone ;
- b) une proportion molaire supérieure ou égale à 0,1% et inférieure ou égale à 0,5%, d'unités monomériques du monomère de formule (I') :

   CH₂=C(CH₃)-C(=O)-O-[(CH₂-CH₂-O]_{n'}-R'₃ (I')

   dans laquelle n' représente un nombre compris entre 4 et 25, et R₃ représente un alkyle linéaire ou ramifié, saturé ou insaturé, comprenant de 12 à 22 atomes de carbone et
- c) une proportion molaire supérieure ou égale à 4% et inférieure ou égale à 19%, d'unités monomériques unités monomériques issues du méthacrylate de diméthyl amino éthyle, ou du N-[3-(diméthylamino propyl)] acrylamide.

L'invention a tout particulièrement pour objet les polymères suivants :
- Le copolymère DMAM/BEM-25(OE),
- Le copolymère DMAM/ATBS (sel de sodium)/BEM-25(OE) et
- Le copolymère DMAM/DMAPAA/BEM-25(OE).
Le procédé de préparation du polymère tel que défini précédemment est caractérisé en ce :
- L'on introduit sous agitation, l'ensemble des monomères dans l'eau ou dans un mélange eau-alcool, l'alcool étant plus particulièrement choisi parmi, le méthanol, l'éthanol ou l'isopropanol;
- le mélange est désoxygéné par barbotage d'azote ;
- On y introduit ensuite un amorceur de polymérisation radicalaire hydrosoluble comme le dichlorhydrate de 2,2'-azo bis(2-amidino propane) (dénommé aussi V50) puis on laisse la polymérisation se faire jusqu'à consommation complète des monomères, en maintenant la température autour de 50°C.

Selon un autre aspect, l'invention a pour objet un procédé de traitement d'une surface constituée en tout ou en partie par un matériau hydrophobe, communément appelé « prétraitement statique », caractérisé en ce qu'il comprend :
- Une étape a) au cours de laquelle une solution aqueuse, hydro-organique ou organique du polymère tel que défini précédemment, est mise en contact avec ladite surface et est laissée incubée ;
- Une étape b) de rinçage de ladite surface issue de l'étape a), pour éliminer ledit polymère non adsorbé sur la surface de ladite surface ;
- Optionnellement, une étape c) de séchage de ladite surface rincée issue de l'étape b).

Préférentiellement, le matériau hydrophobe mis en oeuvre dans le procédé tel que défini ci-dessus, est un matériau polymérique tel que le COC, le COP, et plus généralement les poly(cyclo-oléfines), le PMMA et plus généralement les polymères acryliques, le polycarbonate, les polyesters, les silicones, certains polyuréthanes, et plus généralement toutes sortes de résines polymérisables à froid ou à chaud, de matériaux thermoformables.

Préférentiellement, la surface à traiter par le procédé tel que défini ci-dessus, est une surface d'une puce, d'un système microfluidique, d'un microsystème, ou d'un laboratoire sur puce.

Par solution organique du polymère, on désigne, à l'étape a) du procédé tel que défini ci-dessus, une solution dudit polymère dans un solvant organique.

Par solution hydro-organique, on désigne, à l'étape a) du procédé tel que défini ci-dessus une solution dudit polymère dans un mélange miscible d'eau et d'un composé organique miscible à l'eau. De tels mélanges hydro-organiques sont connus de l'homme du métier, notamment en tant que phase mobile pour la chromatographie.

Selon certains modes de réalisation préférés du procédé tel que défini ci-dessus, ledit composé organique utilisé pur ou en mélange avec l'eau pour dissoudre le polymère selon l'invention peut être un alcool, un ester, une cétone, un acide carboxylique, le diméthylsulfoxide (DMSO), le diméthylformamide (DMF), ou tout autre solvant organique connu de l'homme de l'art.

Selon un autre mode préféré du procédé tel que défini ci-dessus, ledit composé organique est un non-solvant du matériau constituant la surface à traiter.

Selon certains modes de réalisation préférées du procédé tel que défini ci-dessus, ledit composé organique est un composé polaire.

Selon un mode de mise en oeuvre particulièrement préféré du procédé tel que défini ci-dessus, ledit composé organique est l'éthanol.

Dans le procédé tel que défini ci-dessus, par puce, on désigne notamment une plaque d'environ 5cm² à 50cm², d'une épaisseur d'environ 0,1 cm à 1 cm.

Dans le procédé tel que défini ci-dessus, par système microfluidique, on désigne un système comportant au moins une microcavité fermée ou ouverte, comportant dans au moins une direction une dimension inférieure à un millimètre.

Selon la destination qui lui est assignée, ladite puce ou ledit système peut être préalablement à l'étape a) du procédé de traitement, tel que défini ci-dessus, soumis à une étape d) de moulage ou de gravage, de manière à créer sur ladite surface constituée en tout ou en partie par un matériau hydrophobe, des canaux présentant dans une direction, au moins une dimension inférieure à 1 mm.

Ledit procédé tel que défini ci-dessus a notamment pour objet de modifier la mouillabilité de ladite surface, et notamment son angle de contact avec l'eau, et/ou de modifier ses propriétés d'électro-osmose, et/ou de modifier ses propriétés d'adsorption vis à vis d'espèces (moléculaires ou particulaires).

Le procédé tel que défini ci-dessus, est particulièrement intéressant pour modifier les propriétés d'adhésion de surfaces hydrophobes vis à vis d'espèces telles que des molécules organiques, des molécules biologiques, telles que des acides nucléiques, de protéines, des peptides, des métabolites, des principes actifs pharmaceutiques, des glycopeptides, des polysaccharides, ou encore des objets de taille micrométrique ou nanométrique tels que des cellules, des virus, des particules, des colloïdes, des micelles.

Dans de nombreuses applications, l'invention peut être avantageusement mise en oeuvre, pour réduire l'adhésion des dites espèces. Cependant, l'invention peut aussi être avantageuse pour faciliter l'adhésion de certaines espèces, par exemple en induisant sur des surfaces hydrophobes la fixation d'espèces de charges opposées, par l'utilisation d'un polymère cationique, pour favoriser l'adhésion de cellules sur des surfaces hydrophobes, sur lesquelles elles n'adhèreraient pas de façon spontanée, ou au contraire par l'utilisation d'un polymère anionique, pour favoriser l'adsorption de polymères cationiques tels que la poly-lysine, ou la fibronectine, qui à leur tour peuvent favoriser l'adhésion de certaines cellules, ou encore modifier des propriétés d'électro-osmose.

C'est pourquoi l'invention a aussi pour objet l'utilisation du polymère tel que défini précédemment, comme agent modificateur des interactions entre les espèces contenues dans une solution aqueuse, hydro-organique ou organique avec une surface constituée en tout ou en partie par un matériau hydrophobe.

Par espèces contenues dans ladite solution aqueuse, on désigne notamment non seulement des molécules organiques ou des molécules biologiques comme les acides nucléiques, les protéines, les peptides, les métabolites, les principes actifs pharmaceutiques, les glycopeptides ou les polysaccharides, mais aussi des objets de taille micrométrique ou nanométrique comme les cellules, les virus, les particules, les colloïdes ou les micelles.

Ce mode de mise en oeuvre selon l'utilisation telle que définie précédemment, correspond en particulier au principe de traitement de surface dit "traitement de surface dynamique" ("dynamic coating" en langue anglaise), traitement au cours duquel le polymère est en équilibre permanent entre une portion adsorbée sur la surface, et une portion contenue dans la solution, ce qui permet son renouvellement sur ladite surface. Ce mode de mise en oeuvre privilégié permet, dans certains cas, d'augmenter la longévité du traitement de surface. Lors d'un traitement de surface dynamique, la concentration en polymère utilisée est préférentiellement inférieure à celle utilisée pour un prétraitement statique, préférentiellement comprise entre 10⁻⁶% et 0,1% en masse, préférablement entre 10⁻⁴% et 0.01% en masse.

Selon certains modes de mise en oeuvre, ledit traitement dynamique peut être combiné avec un prétraitement statique, pour combiner les avantages des deux modes.

Selon un autre mode de mise en oeuvre préféré, la concentration de polymère dans une solution utilisée en prétraitement statique ou en traitement de surface dynamique, est déterminée à partir de sa concentration micellaire critique (ou CMC).

Les méthodes pour la détermination de la CMC sont connues de l'homme du métier et décrite dans la littérature. Ainsi, pour un prétraitement statique, dans un mode de mise en oeuvre privilégié, le polymère est utilisé à une concentration comprise entre 0,1xCMC et 100xCMC dans la solution utilisée pour le traitement de surface, et plus préférentiellement entre 1xCMC et 50xCMC. Pour un traitement de surface dynamique, la concentration de polymère utilisée sera préférentiellement comprise entre 10⁻³xCMC et 10xCMC, préférentiellement entre 10⁻²xCMC et la CMC.

L'invention a aussi pour objet une solution aqueuse, organique ou hydro-organique contenant d'un polymère linéaire branché ou réticulé tel que définie précédemment, à une concentration en masse comprise entre 10⁻⁴% et 10%.

Selon un mode particulier, ladite solution aqueuse, organique ou hydro-organique telle que définie ci-dessus, est une solution aqueuse, dans laquelle la concentration en ledit polymère linéaire, branché ou réticulé est comprise entre 10⁻⁴% et 1% en masse, préférablement entre 10⁻³% et 0,1% en masse.

Selon un autre mode particulier, ladite solution aqueuse, organique ou hydro-organique telle que définie ci-dessus, est une solution éthanolique, dans laquelle la concentration en ledit polymère linéaire, branché ou réticulé est entre 10⁻⁴% et 10% en masse, préférablement entre 10⁻²% et 1% en masse.

L'invention a enfin pour objet un trousseau comprenant:
a) au moins un contenant, contenant le polymère linéaire branché ou réticulé tel que défini précédemment, et
b) au moins un contenant, contenant la base liquide apte et destinée à préparer ladite solution aqueuse, organique ou hydro-organique contenant ledit polymère linéaire, branché ou réticulé.

Ladite solution aqueuse, organique ou hydro-organique contenant ledit polymère linéaire, branché ou réticulé ainsi préparée au moyen de ce trousseau, est ensuite mise en oeuvre du procédé dans le procédé de traitement tel que défini précédemment, notamment afin de rendre la surface traitée plus hydrophiles, ou de modifier ses propriétés d'adsorption vis à vis d'espèces, ou de modifier leurs propriétés d'électro-osmose.

Les exemples suivants illustrent l'invention sans toutefois la limiter.

### Exemple 1 : Préparation d'un copolymère DMAM/BEM-25(OE) (polymère 1)

Le polymère 1 est préparé comme suit :
Les monomères sont mélangés dans l'eau dans les quantités indiquées dans le tableau suivant :

| **Matière** | **Stoechiométrie** | **Charge** |
|---|---|---|
| DMAM | 95% massique (∼ 99,65% molaire) | 95g |
| BEM-25(OE) | 5% massique (∼ 0,35% molaire) | 5g |
| Eau | | 900g |
| V50 | 0,1% mol/monomères | 0,26g |

Après 45 minutes de désoxygénation, le milieu réactionnel est porté à 50°C et le V50 est introduit dans le réacteur. Le milieu réactionnel blanchit légèrement et devient visqueux. Une augmentation de la température d'environ 3,6°C est enregistrée. La réaction est arrêtée après 2 heures. Après filtration, lavage et séchage, le polymère 1 est obtenu. Le polymère 1 est caractérisé comme suit :
Aspect visuel : Liquide visqueux trouble ;
   Viscosité d'une dispersion à 3% massique du polymère 1 dans l'eau à 25°C (Brookfield™ RVT Mobile 3, Vitesse : 5 tours par minute) : 440 mPas ;
   Viscosité d'une dispersion à 3% massique du polymère 1 dans l'eau à 25°C (CAP2000™, Cône 1, vitesse : 50 tours par minute) : 196 mPas ;
   Teneur résiduelle en N,N-diméthyl acrylamide : inférieure à 0,05% massique ;
   Masse de polymère obtenue : 100g ;

### Exemples 2 et 3 : Préparations des polymères 2 et 3

D'autres essais ont été réalisés dans les mêmes conditions opératoires qu'à l'exemple 1, en modifiant les teneurs massiques des différents composés mis en oeuvre, comme indiqué dans le tableau suivant, pour conduire aux polymères 2 et 3.

| **Matière** | **Polymère 2** | **Polymère 3** |
|---|---|---|
| Rapport massique DMAM/BEM-25(OE) | 97,5/2,5 | 90/10 |
| Teneur molaire en BEM-25(OE) | 0,175% | 0,7% |
| DMAM | 97,5 g | 90 g |
| BEM-25(OE) | 2,5 g | 10 g |
| Eau | 900 g | 900 g |
| V50 | 0,26 g | 0,26 g |

Les conditions opératoires sont identiques à celles de l'exemple 1 précédent. Les polymères 2 et 3 sont caractérisés comme suit :

### Polymère 2

Aspect visuel : Liquide visqueux trouble ;
Viscosité d'une dispersion à 3% massique du polymère 2 dans l'eau à 25°C (Brookfield™ RVT Mobile 3, Vitesse : 5 tours par minute) : 2.240 mPas ;
Teneur résiduelle en N,N-diméthyl acrylamide : inférieure à 0,05% massique ;
Masse de polymère obtenue : 100g.

### Polymère 3

Aspect visuel : Liquide très visqueux et blanc ;
Viscosité d'une dispersion à 3% massique du polymère 3 dans l'eau à 25°C (Brookfield™ RVT Mobile 3, Vitesse : 5 tours par minute) : 3800 mPas ;
Teneur résiduelle en N,N-diméthyl acrylamide : inférieure à 0,05% massique ; Masse de polymère obtenue : 100g.

### Exemple 4 : Préparation d'un polymère anionique DMAM/ATBSNa/BEM-25(OE) (polymère 4)

Le polymère 4 est préparé comme suit :
Les monomères sont mélangés dans l'eau dans les quantités indiquées dans le tableau suivant :

| **Matière** | **Polymère 4** |
|---|---|
| Rapport massique DMAM/ATBS sel de Na/BEM-25(OE) | 75/20/5 |
| Rapport molaire DMAM/ATBS sel de Na/BEM-25(OE) | 90/10/0,35 |
| DMAM | 75,25g |
| ATBS sel de Na 55% | 35,4g |
| BEM-25(OE) | 5g |
| Eau | qsp 1000g |
| V50 (0,1% mol/monomères) | 0,23g |

Après 45 minutes de désoxygénation, le milieu réactionnel est porté à 50°C et le V50 est introduit dans le réacteur. Le milieu réactionnel blanchit rapidement après l'introduction de l'amorceur et devient visqueux. L'agitation est réduite. Après 2 heures de réaction, le chauffage est coupé et le produit laissé 2 heures avant vidange. La teneur en DMAM est < 0,05% (méthode S52-385B), ce qui signifie que la réaction de polymérisation s'est bien déroulée.

### Exemple 5 : Préparation d'un polymère cationique DMAM/DMAPAA/BEM-25(OE) (polymère 5)

| **Matière** | **Polymère 5** |
|---|---|
| Rapport massique DMAM/DMAPAA/BEM-25(OE) | 80/15/5 |
| Rapport molaire DMAM/DMAPAA/BEM-25(OE) | 90/10/0,35 |
| DMAM | 80,2 g |
| DMAPAA | 14,3 g |
| BEM-(25OE) | 5 g |
| HCl 1N | qsp pH=7 |
| Eau | qsp 1000 g |
| V50 (0,1% mol/monomères) | 0,24 g |

Le mode opératoire utilisé est celui décrit précédemment. Le milieu réactionnel est maintenu à pH = 7 ; il blanchit rapidement et devient visqueux. Après 1h30 de réaction, le chauffage est coupé et le milieu réactionnel est laissé refroidir une nuit. La teneur en DMAM est < 0,05%, ce qui signifie que la réaction de polymérisation s'est bien déroulée.

### Exemple 6 : Traitement d'une surface en COC

Une série de plaques Topas™ 8007 (5cm x 5cm x 5mm) commercialisée par la société dénommé "Topas advanced Polymers", est nettoyée à l'acétone et à l'isopropanol puis séchée à l'air comprimé.

200 microlitres d'une solution de traitement A₁ selon l'invention, à 0,01% en poids de polymère 1 dans un tampon phosphate à pH = 7,4, vendu par la société Life technologies sous la dénomination « Phosphate-Buffered Saline (PBS, pH=7,4) ensuite étalés de façon homogène sur une des faces d'une plaque, puis la surface ainsi traitée est laissée incuber pendant 1 heure à température ambiante.

Dans une autre expérience, 200 microlitres d'une solution de traitement B₁ selon l'invention à 0,1% en poids de polymère 1 dans l'éthanol sont étalés de façon homogène sur une des faces d'une seconde plaque, puis la surface ainsi traitée est laissée incuber pendant 1 heure à température ambiante.

Dans les deux cas, la plaque est ensuite rincée à l'eau osmosée pour éliminer le polymère non adsorbé, puis séchée à l'air comprimé.

Les plaques ainsi préparées sont prêtes pour leur utilisation ultérieure.

Deux nouvelles plaques sont également préparées selon le même protocole à l'aide de solution de traitement A₂ et B₂, identiques aux solutions A₁ et B₁, à l'exception du polymère utilisé qui est le polymère 2.

### Exemple 7 : Mesure d'angle de contact.

L'angle de contact de l'eau sur les plaques traitées avec les solutions A₁, B₁, A₂ et B₂ a été mesuré à l'aide d'un goniomètre optique.

Une goutte d'eau de 3 microlitres est déposée à l'aide d'une seringue, et l'image de la goutte pendant sa formation est analysée en incidence rasante par une caméra haute résolution, puis traitée à l'aide d'un logiciel.

Une surface de COC provenant de la même source mais n'ayant pas subi le traitement avec les polymères de l'invention est utilisée en référence.

Dans tous les cas, une moyenne sur 10 mesures est effectuée pour déterminer la barre d'erreur. Les résultats, consignés dans le tableau ci-dessous, font apparaître que l'ensemble des polymères et des modes de mise en oeuvre permettent de réduire de façon significative l'angle de contact, c'est à dire de rendre les surfaces initialement hydrophobes nettement plus mouillantes.

| Solution de traitement | Angle de contact (degrés) |
|---|---|
| Surface non traitée | 89,4+/-2,7 |
| Surface traitée avec la solution A₁ | 72,7+/-1,2 |
| Surface traitée avec la solution A₂ | 72,1 +/-1,1 |
| Surface traitée avec la solution B₁ | 74,8+/-1,3 |
| Surface traitée avec la solution B₂ | 77,7+/-1,8 |

### Exemple 8 : Traitement de microcanaux.

### Préparation des microcanaux

Un moule en aluminium comportant une croix est préparé par micro-usinage à l'aide d'une machine Minitec Machinery Corporation, et d'un outil de découpe de 100µm de diamètre.

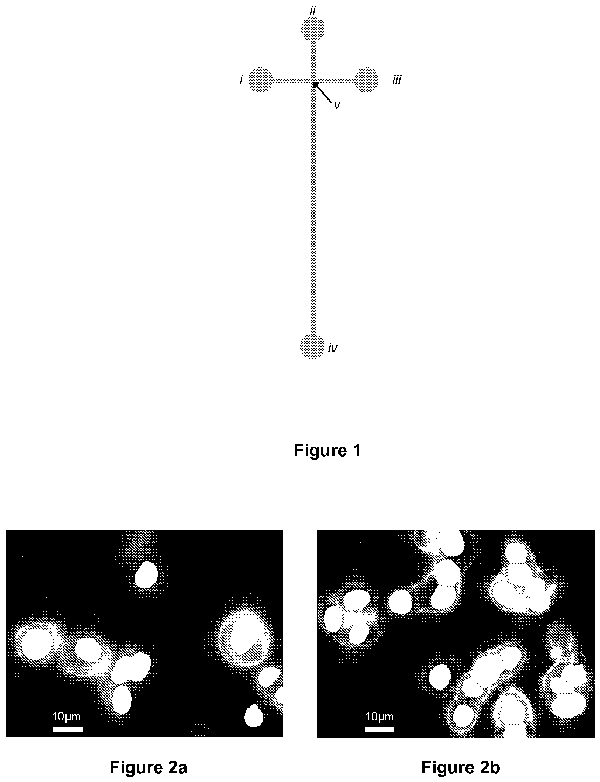

Le dessin des microcanaux est représenté Figure 1. Les longueurs de chacune des branches sont les suivantes :
Branche i : 4mm ; Branche ii : 4mm ; Branche iii : 4mm ; Branche iv : 50mm.

Une plaque de COC telle que présentée dans l'exemple 7 est mise en contact avec le moule (master en langue anglaise) au sein d'une presse hydraulique chauffée (SPECAC™). L'embossage est effectué sous une pression de 50kPa à 130°C pendant 10 minutes. Il est suivi d'un refroidissement à 40°C sous la même pression, puis la presse est ouverte et la plaque portant les microcanaux est retirée. Les réservoirs sont percés à la perceuse, et la plaque est lavée dans un bain ultrasonore d'isopropanol puis séchée.

Les microcanaux sont ensuite fermés à l'aide d'un film de COC. La plaque portant les microcanaux et le film sont placés pendant 4 minutes au dessus d'un bain de cyclohexane dans une boite de pétri munie d'un couvercle, pour être exposés à la vapeur de cyclohexane, puis pressés l'un contre l'autre à 50 kPa à 60°C pendant 20 minutes. La largeur des canaux est de 100µm et leur profondeur de 50µm. Les réservoirs à l'extrémité de chaque branche de la croix font 3mm de diamètre sur 5mm de profondeur. Des tubes en Tygon™ sont reliés d'un côté aux réservoirs de la puce, et de l'autre aux réservoirs d'un système de contrôle de pression MFCS Fluigent™, afin de faire circuler les fluides dans la puce à partir de l'extrémité de la plus longue branche de la croix.

Le traitement des microcanaux avec les solutions aqueuses (A₁ ou A₂) est effectué comme suit :
- Les microcanaux sont d'abord remplis avec 500µl d'éthanol filtré sous pression [(ΔP = 3,5x10⁴Pa (350 mbar)] ;
- L'éthanol est ensuite éliminé en les rinçant avec 500µl de tampon PBS 1X à 2x10⁴ Pa (200mbar).
- Puis 500µl de la solution de traitement sont injectés à une pression de 10⁴ Pa (100mbar), et laissés incuber 1 heure à la température de la pièce sans écoulement.
- Enfin, les canaux sont rincés avec 500µl de PBS à une pression de poussée de 10⁴ Pa (100 mbar).

Le traitement des microcanaux avec les solutions alcooliques (B₁ ou B₂) est effectué comme suit :
- La solution alcoolique contenant le polymère est injectée directement dans les mêmes conditions que celles mentionnées ci-dessus ;
- Le canal est séché sous vide, puis rincé par une solution aqueuse de PBS.

### Exemple 9 : Mesure d'électro-osmose dans les microcanaux préparés dans l'exemple 8

Les propriétés d'électro-osmose sont mesurées par la technique de la mesure du courant, telle que décrite dans (Yasui T. et al : "Characterization of low viscosity polymer solutions for microchip electrophoresis of non-denatured proteins on plastic chips." ; Biomicrofluidics Vol. 5, Issue 4, page 044114).
- Les microcanaux, le réservoir d'échantillon i, le réservoir de tampon ii et le réservoir de sortie d'échantillon iii sont remplis avec un premier tampon phosphate 20 mM, pH = 7,5.
- Le réservoir de sortie de tampon iv est rempli avec le tampon 5 fois dilué, soit 4 mM, pH = 7,5.
- Une source de tension HVS448 1500V Labsmith, Livermore, est utilisée pour appliquer un champ de 270 V/cm, et faire migrer par électro-osmose un front de tampon depuis le réservoir de sortie de tampon, et le courant est mesuré pendant l'opération à l'aide du logiciel fourni par Labsmith.
- Le temps nécessaire pour atteindre un plateau est utilisé pour mesurer la vitesse linéaire d'électro-osmose. Pour chaque expérience, trois mesures indépendantes ont été effectuées.

Les résultats, consignés dans le tableau ci-dessous, montrent que dans tous les cas, les traitements selon l'invention ont permis de réduire l'électro-osmose, ce qui est caractéristique de la présence durable d'une couche de polymère hydrophile à la surface du microcanal.

| Solution de traitement | Vitesse d'électro-osmose |
|---|---|
| | (x10⁻⁴ cm² /V /s) |
| Surface non traitée | 2,76+/-0,14 |
| Surface traitée avec la solution A₁ | 0,85+/-0,14 |
| Surface traitée avec la solution A₂ | 1,43+/-0,19 |
| Surface traitée avec la solution B₁ | 1,23+/-0,04 |
| Surface traitée avec la solution B₂ | 0,75+/-0,15 |

### Exemple 10 : Effet du traitement d'un microcanal en COC avec la solution B₂ sur l'adsorption de protéines.

De simples canaux linéaires ont été préparés selon le même protocole que celui décrit à l'exemple 8, à l'exception de la forme du moule, qui présente un simple canal droit de 3cm de long et de 500µm de large.

Après traitement de la surface du microcanal avec la solution B₂ selon le protocole décrit à l'exemple 8, le microcanal et rempli par circulation de 500µl de PBS 1X. Puis une solution de BSA (albumine de sérum bovin fluorescente, de Life Technologies™) en suspension à 0,1% en masse dans le PBS 1X est introduite dans le canal à une pression de 10³Pa (10mbar), et est incubée pendant 10 minutes à la température ambiante. Les canaux sont ensuite rincés pendant 10 minutes avec du PBS 1X sans protéine sous une pression de 10mbar. La fluorescence du microcanal avant et après incubation est enregistrée à l'aide d'un microscope NIKON Eclipse™ équipé d'une camera Coolpix Roper Scientific™, d'une lampe HGFIL™ 130W, d'un jeu de filtres FITC™, avec un temps d'exposition fixe de 200 ms. 3 différentes mesures ont été faites à différents endroits pour chaque condition, et le signal a été corrigé du bruit de fond de la caméra et de l'auto-fluorescence du COC (enregistré à l'extérieur du microcanal). Pour évaluer le caractère réversible du traitement, et vérifier que la surface n'a pas été altérée, 3 cycles de fixation de la protéine, rinçage au PBS, nettoyage à l'alcool, puis nouveau traitement, ont été effectués, sans donner lieu à une variation significative des résultats. Ces derniers, consignés dans le tableau ci-dessous, font apparaître que le traitement selon l'invention réduit grandement l'adsorption de cette protéine, connue pour adhérer fortement aux surfaces notamment hydrophobes.

| Traitement | Fluorescence (unités arbitraires) | Nombre de billes adsorbées |
|---|---|---|
| Aucun | 14,3+/-1,6 | 3326+/-930 |
| Solution B₂ | 2,9+/-0,3 | 139+/-49 |

### Exemple 11 : Adsorption au sein d'un microcanal de microparticules.

Le même protocole que pour l'exemple 10 a été utilisé, à l'exception de la solution de protéine fluorescente, qui a été remplacée par 70µl d'une solution de microbilles à une concentration de 0,13billes/µL ("Dynabeads Epithelial Enrich" dans du PBS enrichi de 0.1 % de Tween 20™ pour assurer la stabilité colloïdale des billes.

Cette solution a été d'abord introduite à 100mbars, puis la pression a été réduite afin d'atteindre un débit de 1µl/min pour favoriser la sédimentation des billes. Finalement, les billes non adsorbées ont été éliminées par rinçage avec une solution de PBS enrichi de 0.1% de Tween 20™ à la pression de 300mbar.

Des images d'un microcanal non traité, et d'un microcanal préalablement traité avec la solution B₂ ont été prises à l'aide du même microscope que décrit dans l'exemple 10, muni d'un objectif 10X, et traitées de façon automatique afin de compter les billes. Les résultats donnés dans la troisième colonne du tableau 10.1, montrent que le traitement réduit de façon spectaculaire l'adsorption de microparticules.

### Exemple 12 : Détermination de la CMC des polymères 1 et 2

La CMC est déterminée par la méthode de la plaque de Wilhelmy (machine K10 Kruss), avec une série de dilutions des polymères dans un tampon 1X PBS, variant de 10⁻⁸% à 1%. Pour les deux polymères, la CMC déterminée par cette méthode est comprise entre 0,5% et 2 10⁻³% en masse de polymère.

### Exemple 13 : Utilisation de polymères selon l'invention du type polymère chargé, pour faciliter l'adhésion de cellules.

Cette étude à été menée sur des surfaces ouvertes en COC, constituées par des feuilles de COC TOPAS 8007, de 145µm d'épaisseur. Elles ont été découpées selon les dimensions 2mm x 4mm et collées sur des lames de verre StarFrost avec une colle durcissable par irradiation UV (NOA81, Norland Optical Adhésive), afin de faciliter leur manipulation sous microscope. Le temps d'insolation utilisé est de 10 min avec une lampe UV (Fisher Scientific).

### Choix des traitements:

On utilise comme référence de l'état de l'art un traitement sous forme d'une double couche de Hydroxyéthyl cellulose (HEC, masse moléculaire moyenne -90.000, Sigma Aldrich) - Poly-L-Lysine (PLL, masse moléculaire : 150.000-300.000, concentration : 0.01%, stérile-filtrée, Sigma Aldrich). Le traitement HEC est biocompatible et il s'adsorbe sur le COC pour le rendre hydrophile (angle de contact du COC traité=56°). La PLL s'adsorbe sur le COC traité avec le HEC, lui conférant une charge positive, ce qui améliore l'adhésion des cellules sur le verre.

Dans cet exemple on a utilisé deux polymères chargés selon l'invention :
un autre lot de polymère DMAM-C22 M a été greffé avec 10% de charges anioniques (sulfonate de sodium) et un troisième lot de polymère a été greffé avec 10% de charges cationiques (type chlorhydrate d'amine tertiaire). Ainsi le polymère anionique peut être utilisé pour coupler la PLL à la surface du COC, et le polymère cationique pourrait être utilisé seul.

### Préparation des lames :

Les solutions suivantes ont été préparées pour traiter la surface du COC :
- Solution 1 : HEC 2% en masse dans le PBS 1X
- Solution 2 : DMAM-C22 M neutre (polymère 3 décrit dans l'exemple 3) à 0,1% en masse dans de l'eau MiliQ.
- Solution 3 : DMAM-C22 anionique (polymère 4 décrit dans l'exemple 4) 0,1% en masse dans de l'eau MiliQ.
- Solution 4 : DMAM-C22 cationique (polymère 5 décrit dans l'exemple 5), 0,1% en masse dans de l'eau MiliQ.

Les solutions de polymère ont été incubées sur le COC pendant la nuit, puis rincées une fois avec 50µL de PBS 1X, puis dans un bain de PBS 1X pendant 5 minutes.

Les lames de COC traitées avec les solutions 1,2 et 3 ont ensuite été traitées avec une solution de PLL à 37°C dans un incubateur avec une atmosphère humide avec 5% CO₂ pendant 2 heures, puis rincées au PBS 1X.

Les lames de COC traitées avec la solution 4 ont été utilisées directement sans PLL.

Pour chaque lame, nous avons collé une micro-chambre en silicone pour confiner les cellules dans un volume de 50µL et limiter la surface d'adhésion des cellules pour faciliter l'imagerie.

Dans chaque chambre, nous avons injecté 10µL d'une solution de cellules épithéliales (lignée MCF-7, cancer du sein) avec une concentration de 2000 cellules/µL.

Après 24 heures de culture dans un incubateur avec une atmosphère humide avec 5% CO₂, les lames ont été lavées 2 fois avec du PBS 1X pour éliminer les cellules qui n'ont pas adhéré au substrat. Les cellules qui ont adhéré au COC ont ensuite été fixées pendant 30 min dans une solution de Paraformaldéhyde à 3,7%. Après fixation les lames ont été lavées 2 fois dans du PBS 1X.

### Marquages EPCAM-FITC +DAPI/Vectashield :

Pour comparer l'efficacité des traitements les cellules accrochées aux lames après les avoir marqué en fluorescence ont été observées par microscopie de fluorescence. Les membranes cellulaires ont été marquée avec des anticorps anti-EpCAM (20 µL Ab EpCAM + 500 µL PBS+1% BSA) pendant 30 min à température ambiante. Nous avons ensuite effectué un premier lavage avec 50 µL d'une solution de PBS1X contenant 1% de BSA, puis dans un bain de PBS1X pendant 5 minutes à température ambiante. Nous avons finalement appliqué une goutte de DAPI/Vectashield sur chaque spot de cellules et nous avons couvert le tout avec une lamelle de dimensions 50 x 24 mm. Les échantillons ont été gardé à 4°C jusqu'à l'acquisition des images en fluorescence (DAPI +FITC).

### Résultats :

- La solution de HEC+PLL améliore l'adhésion des cellules sur la surface du COC. Par contre ce traitement ne semble pas adapté à la culture des cellules MCF-7. Dans nos expériences nous avons observé une densité faible de cellules adhérées au COC. Beaucoup de cellules semblent avoir explosées ou avoir subi un processus apoptotique, les membranes visibles par marquage EpCAM ne sont pas bien définies ou ne sont pas observables, comme cela apparaît sur la Figure 2a.

- Pour le COC + DMAM-C22 M (0,35%) + PLL, on observe un bruit de fond important dans le canal FITC, une densité de cellules convenable mais beaucoup de cellules lysées ou apoptotiques. Ce traitement semble être un bon candidat pour attacher des cellules sur le COC mais par pour leur culture.
- Pour le COC + DMAM-C22 anionique + PLL, le bruit de fond est faible ce qui montre que ce traitement ne favorise pas l'adsorption non spécifique des anticorps. Cependant la densité de cellules attachées à la surface du COC est faible ce qui implique que les cellules ont du mal à adhérer sur le substrat. On observe également des cellules semi apoptotiques mais pas de cellules lysées.
- Le traitement DMAM-C22 cationique (sans PLL) semble adapté pour promouvoir l'adhésion et la division des cellules MCF-7. On observe sur la Figure 2b, une densité cellulaire convenable et des doublets ou multiplets de cellules, caractéristiques de cellules divisées.

On constate donc que les polymères chargés selon l'invention peuvent constituer une amélioration par rapport l'état de l'art, soit sous forme anionique combinée à un polymère cationique, pour améliorer l'adhésion cellulaire, soit utilisés seuls pour favoriser la culture cellulaire.

## Revendications

1. Polymère linéaire, branché ou réticulé, comportant pour 100% molaire :
- a) une proportion molaire supérieure ou égale à 75% et inférieure ou égale à 99,95% d'unités monomériques issues d'un N,N-dialkyl acrylamide, les radicaux alkyle comportant chacun de 1 à 4 atomes carbone ;
- b) une proportion molaire supérieure ou égale à 0,05% et inférieure ou égale à 1%, d'unités monomériques issues d'un monomère de formule (I) :
CH₂=C(R₁)-C(=O)-O-[(CH₂-CH(R₂)-O]ₙ-R₃ (I)
dans laquelle n représente un nombre compris entre 1 et 50, R₁ représente un atome d'hydrogène ou un radical méthyle, R₂ représente un atome d'hydrogène, un radical méthyle ou un radical éthyle et R₃ représente un radical aliphatique hydrocarboné, linéaire ou ramifié, saturé ou insaturé, comprenant de 8 à 30 atomes de carbone, et
- c) optionnellement une proportion molaire supérieure à 0% et inférieure ou égale à 24%, soit d'unités monomériques issues d' un monomère comportant une fonction acide fort libre, partiellement ou totalement salifiée, soit d'unités monomériques issues d'un monomère de formule (II) :
CH₂=C(R₄)-C(=O)-Y-(CH₂)ₘ-N(R₅)(R₆) (II),
dans laquelle m représente un nombre compris entre 1 et 4, Y représente O ou NH, R₄ représente un atome d'hydrogène ou un radical méthyle, R₅ et R₆ identiques ou différents représentent un radical méthyle ou un radical éthyle, et
d) optionnellement une proportion molaire supérieure à 0% et inférieure ou égale à 1% d'un monomère de réticulation diéthylénique ou polyéthylénique.

2. Polymère tel que défini à la revendication 1, dans lequel les unités monomériques issues dudit N,N-dialkyl acrylamide, sont issues du N,N-diméthyl acrylamide ou du N,N-diéthyl acrylamide.

3. Polymère tel que défini à l'une quelconque des revendications 1 ou 2, dans lequel les unités monomériques issues dudit monomère de formule (I), sont issues :
- Du méthacrylate de béhényle pentacosaéthoxylé, ou
- Du méthacrylate de stéaryle eicosaéthoxylé.

4. Polymère tel que défini à l'une quelconque des revendications 1 à 3, **caractérisé en ce que**, lorsqu'il comporte des unités monomériques issues dudit monomère comportant une fonction acide fort libre, partiellement ou totalement salifiée, celles-ci sont issues de l'acide 2-méthyl 2-[(1-oxo 2-propènyl) amino] 1-propanesulfonique, libre, partiellement ou totalement salifié.

5. Polymère tel que défini à l'une quelconque des revendications 1 à 3, **caractérisé en ce que**, lorsqu'il comporte des unités monomériques issues dudit monomère de formule (II), celles-ci sont issues du :
- Méthacrylate de diméthyl amino éthyle ou du
- N-[3-(diméthylamino propyl)] acrylamide.

6. Polymère tel que défini à l'une quelconque des revendications 1 à 3, comportant pour 100% molaire :
- a) une proportion molaire supérieure ou égale à 99% et inférieure ou égale à 99,9% d'unités monomériques issues dudit N,N-dialkyl acrylamide ; et
- b) une proportion molaire supérieure ou égale à 0,1% et inférieure ou égale à 1%, d'unités monomériques issues d'un monomère de formule (I') :
CH₂=C(CH₃)-C(=O)-O-[(CH₂-CH₂-O]_{n'}-R'₃ (I')
dans laquelle n' représente un nombre compris entre 4 et 25, et R₃ représente un alkyle linéaire ou ramifié, saturé ou insaturé, comprenant de 12 à 22 atomes de carbone.

7. Polymère tel que défini à la revendication 4, comportant pour 100% molaire :
- a) une proportion molaire supérieure ou égale à 80% et inférieure ou égale à 95%, d'unités monomériques issues dudit N,N-dialkyl acrylamide ;
- b) une proportion molaire supérieure ou égale à 0,1% et inférieure ou égale à 0,5%, d'unités monomériques d'un monomère de formule (I') :
CH₂=C(CH₃)-C(=O)-O-[(CH₂-CH₂-O]_{n'}-R'₃ (I')
dans laquelle n' représente un nombre compris entre 4 et 25, et R₃ représente un alkyle linéaire ou ramifié, saturé ou insaturé, comprenant de 12 à 22 atomes de carbone, et
- c) une proportion molaire supérieure ou égale à 4% et inférieure ou égale à 19%, d'unités monomériques issues de l'acide 2-méthyl 2-[(1-oxo 2-propènyl) amino] 1-propanesulfonique, libre, partiellement ou totalement salifié.

8. Polymère tel que défini à la revendication 5, comportant pour 100% molaire :
- a) une proportion molaire supérieure ou égale à 80% et inférieure ou égale à 95%, d'unités monomériques issues dudit N,N-dialkyl acrylamide ;
- b) une proportion molaire supérieure ou égale à 0,1% et inférieure ou égale à 0,5%, d'unités monomériques dudit monomère de formule (I') :
CH₂=C(CH₃)-C(=O)-O-[(CH₂-CH₂-O]_{n'}-R'₃ (I')
dans laquelle n' représente un nombre compris entre 4 et 25, et R₃ représente un alkyle linéaire ou ramifié, saturé ou insaturé, comprenant de 12 à 22 atomes de carbone, et
- c) une proportion molaire supérieure ou égale à 4% et inférieure ou égale à 19%, d'unités monomériques unités monomériques issues du méthacrylate de diméthylamino éthyle, ou du N-[3-(diméthylamino propyl)] acrylamide.

9. Procédé de traitement d'une surface constituée en tout ou en partie par un matériau hydrophobe, **caractérisé en ce qu'**il comprend :
- Une étape a) au cours de laquelle une solution aqueuse, hydro-organique ou organique du polymère tel que défini à l'une quelconque des revendications 1 à 8, est mise en contact avec ladite surface et est laissée incubée ;
- Une étape b) de rinçage de ladite surface issue de l'étape a), pour éliminer ledit polymère non adsorbé sur la surface de ladite surface ;
- Optionnellement, une étape c) de séchage de ladite surface rincée issue de l'étape b).

10. Procédé tel que défini à la revendication 9, dans lequel ladite surface constituée en tout ou en partie par un matériau hydrophobe, est une surface d'une puce, d'un système microfluidique, d'un microsystème, ou d'un laboratoire sur puce.

11. Procédé tel que défini à l'une des revendications 9 ou 10, **caractérisé en ce qu'**il comprend un étape d), préalable à l'étape a) une étape de moulage ou de gravage, de manière à créer sur ladite surface constituée en tout ou en partie par un matériau hydrophobe, des canaux présentant dans une direction, au moins une dimension inférieure à 1 mm.

12. Utilisation du polymère tel que défini à l'une quelconque des revendications 1 à 8, comme agent modificateur des interactions entre les espèces contenues dans une solution aqueuse, hydro-organique ou organique avec une surface constituée en tout ou en partie par un matériau hydrophobe.

13. Solution aqueuse, organique ou hydro-organique contenant d'un polymère linéaire, branché ou réticulé, tel que définie à l'une des revendications 1 à 8, à une concentration en masse comprise entre 10⁻⁴% et 10%.

14. Trousseau comprenant:
a) au moins un contenant comprenant le polymère linéaire, branché ou réticulé, tel que défini l'une quelconque des revendications 1 à 8, et
b) au moins un contenant comprenant la base liquide apte et destinée à préparer ladite solution aqueuse, organique ou hydro-organique contenant ledit polymère linéaire, branché ou réticulé.

## Patentansprüche

1. Lineares, verzweigtes oder vernetztes Polymer, zu 100 Mol-% Folgendes umfassend:
- a) einen molaren Anteil, höher als oder gleich 75% und kleiner als oder gleich 99,95%, von Monomereinheiten, die aus einem N,N-Dialkylacrylamid erhalten werden, wobei die Alkylradikale jeweils 1 bis 4 Kohlenstoffatome umfassen;
- b) einen molaren Anteil, höher als oder gleich 0,05% und kleiner als oder gleich 1%, von Monomereinheiten, die aus einem Monomer der Formel (I) erhalten werden:
CH₂=C(R₁)-C(=O)-O-[(CH₂-CH(R₂)-O]ₙ-R₃ (I)
wobei n eine zwischen 1 und 50 umfasste Zahl darstellt, R₁ ein Wasserstoffatom oder ein Methylradikal darstellt, R₂ ein Wasserstoffatom, ein Methylradikal oder ein Ethylradikal darstellt und R₃ ein aliphatisches Kohlenwasserstoffradikal, linear oder verzweigt, gesättigt oder ungesättigt, umfassend von 8 bis 30 Kohlenstoffatome, darstellt, und
- c) wahlweise einen molaren Anteil, höher als 0% und kleiner als oder gleich 24%, entweder von Monomereinheiten, die aus einem Monomer erhalten werden, das eine starke Säurefunktion trägt, die frei, teilweise oder vollständig als Salz vorliegt, oder von Monomereinheiten, die von einem Monomer der Formel (II) erhalten werden:
CH₂=C(R₄)-C(=O)-Y-(CH₂)ₘ-N(R₅)(R₆) (II),
wobei m eine zwischen 1 und 4 umfasste Zahl darstellt, Y O oder NH darstellt, R₄ ein Wasserstoffatom oder ein Methylradikal darstellt, R₅ und R₆, gleich oder verschieden, ein Methylradikal oder ein Ethylradikal darstellen, und
d) wahlweise einen molaren Anteil höher als 0% und kleiner als oder gleich 1% von einem diethylenischen oder polyethylenischen vernetzenden Monomer.

2. Polymer wie gemäß Anspruch 1 definiert, wobei die von dem N,N-Dialkylacrylamid erhaltenen Monomereinheiten von N,N-Dimethylacrylamid oder von N,N-Diethylacrylamid erhalten werden.

3. Polymer wie gemäß einem der Ansprüche 1 oder 2 definiert, wobei die von dem Monomer der Formel (I) erhaltenen Monomereinheiten aus Folgendem erhalten werden:
- von pentacosaethoxyliertem Behenylmethacrylat, oder
- von eicosaethoxyliertem Stearylmethacrylat.

4. Polymer wie in einem der Ansprüche 1 bis 3 definiert, **dadurch gekennzeichnet, dass**, wenn es von dem Monomer, das eine starke Säurefunktion umfasst, die frei, teilweise oder vollständig als Salz vorliegt, erhaltene Monomereinheiten umfasst, diese von der 2-Methyl-2-[(1-oxo-2-propenyl)amino]-1-propansulfonsäure, die frei, teilweise oder vollständig als Salz vorliegt, erhalten werden.

5. Polymer wie in einem der Ansprüche 1 bis 3 definiert, **dadurch gekennzeichnet, dass**, wenn es von dem Monomer der Formel (II) erhaltene Monomereinheiten umfasst, diese aus Folgendem erhalten werden:
- Dimethylaminoethylmethacrylat oder von
- N-[3-(Dimethylaminopropyl)]acrylamid.

6. Polymer wie in einem der Ansprüche 1 bis 3 definiert, zu 100 Mol-% Folgendes umfassend:
- a) einen molaren Anteil, höher als oder gleich 99% und kleiner als oder gleich 99,9%, von Monomereinheiten, die aus dem N,N-Dialkylacrylamid erhalten werden; und
- b) einen molaren Anteil, höher als oder gleich 0,1% und kleiner als oder gleich 1%, von Monomereinheiten, die aus einem Monomer der Formel (I') erhalten werden:
CH₂=C(CH₃)-C(=O)-O-[(CH₂-CH₂-O]_{n'}-R'₃ (I')
wobei n' eine zwischen 4 und 25 umfasste Zahl darstellt und R₃ ein lineares oder verzweigtes, gesättigtes oder ungesättigtes Alkyl darstellt, umfassend von 12 bis 22 Kohlenstoffatome.

7. Polymer wie gemäß Anspruch 4 definiert, zu 100 Mol-% Folgendes umfassend:
- a) einen molaren Anteil, höher als oder gleich 80% und kleiner als oder gleich 95%, von Monomereinheiten, die aus N,N-Dialkylacrylamid erhalten werden;
- b) einen molaren Anteil, höher als oder gleich 0,1% und kleiner als oder gleich 0,5%, von Monomereinheiten, aus einem Monomer der Formel (I'):
CH₂=C(CH₃)-C(=O)-O-[(CH₂-CH₂-O]_{n'}-R_{'3} (I')
wobei n' eine zwischen 4 und 25 umfasste Zahl darstellt und R₃ ein lineares oder verzweigtes, gesättigtes oder ungesättigtes Alkyl darstellt, umfassend von 12 bis 22 Kohlenstoffatome, und
- c) einen molaren Anteil, höher als oder gleich 4% und kleiner als oder gleich 19%, von Monomereinheiten, die aus 2-Methyl-2-[(1-oxo-2-propenyl)amino]-1-propansulfonsäure, die frei, teilweise oder vollständig als Salz vorliegt, erhalten werden.

8. Polymer wie gemäß Anspruch 5 definiert, zu 100 Mol-% Folgendes umfassend:
- a) einen molaren Anteil, höher als oder gleich 80% und kleiner als oder gleich 95%, von Monomereinheiten, die aus N,N-Dialkylacrylamid erhalten werden;
- b) einen molaren Anteil, höher als oder gleich 0,1% und kleiner als oder gleich 0,5%, von Monomereinheiten, die aus einem Monomer der Formel (I') sind:
CH₂=C(CH₃)-C(=O)-O-[(CH₂-CH₂-O]_{n'}-R'₃ (I')
wobei n' eine zwischen 4 und 25 umfasste Zahl darstellt und R₃ ein lineares oder verzweigtes, gesättigtes oder ungesättigtes Alkyl darstellt, umfassend von 12 bis 22 Kohlenstoffatome, und
- c) einen molaren Anteil, höher als oder gleich 4% und kleiner als oder gleich 19%, von Monomereinheiten Monomereinheiten, die aus Dimethylaminoethylmethacrylat oder aus N-[3-(Dimethylaminopropyl)]acrylamid erhalten werden.

9. Verfahren zum Behandeln einer Oberfläche, die ganz oder zum Teil aus einem hydrophoben Material besteht, **dadurch gekennzeichnet, dass** es Folgendes umfasst:
- einen Schritt a), während dem eine wässrige, wässrig-organische oder organische Lösung des Polymers, wie in einem der Ansprüche 1 bis 8 definiert, mit der Oberfläche in Kontakt gebracht und inkubieren gelassen wird;
- einen Schritt b) des Spülens der von Schritt a) erhaltenen Oberfläche zum Entfernen des nicht auf der Oberfläche adsorbierten Polymers von der Oberfläche;
- wahlweise einen Schritt c) des Trocknens der aus Schritt b) erhaltenen gespülten Oberfläche.

10. Verfahren wie gemäß Anspruch 9 definiert, wobei die Oberfläche, die ganz oder zum Teil aus einem hydrophoben Material besteht, eine Oberfläche eines Chips, eines Mikrofluidsystems, eines Mikrosystems oder eines Labors auf einem Chip ist.

11. Verfahren wie gemäß einem der Ansprüche 9 oder 10 definiert, **dadurch gekennzeichnet, dass** es einen Schritt d) umfasst, Schritt a) vorangehend, ein Schritt des Gießens oder der Gravur, auf eine Weise, um die Oberfläche, die ganz oder zum Teil aus einem hydrophoben Material besteht, zu erzeugen, wobei Kanäle mindestens eine Abmessung kleiner als 1 mm in eine Richtung aufweisen.

12. Verwendung des Polymers wie gemäß einem der Ansprüche 1 bis 8 definiert, als Modifikationsmittel der Wechselwirkungen zwischen den in einer wässrigen, wässrigorganischen oder organischen Lösung enthaltenen Spezies mit einer ganz oder zum Teil aus einem hydrophoben Material bestehenden Oberfläche.

13. Wässrige, organische oder wässrig-organische Lösung, die ein lineares, verzweigtes oder vernetztes Polymer, wie gemäß einem der Ansprüche 1 bis 8 definiert, bei einer zwischen 10⁻⁴% und 10% umfassten Massenkonzentration enthält.

14. Schabloniereinrichtung, umfassend:
a) mindestens einen Behälter, der das lineare, verzweigte oder vernetzte Polymer umfasst, wie gemäß einem der Ansprüche 1 bis 8 definiert, und
b) mindestens einen Behälter, der die flüssige Basis umfasst, die in der Lage und dazu bestimmt ist, die wässrige, organische oder wässrig-organische Lösung zuzubereiten, die das lineare, verzweigte oder vernetzte Polymer enthält.

## Claims

1. Linear polymer, branched or crosslinked, comprising, for 100% molar:
- a) a molar proportion greater than or equal to 75% and less than or equal to 99.95% of monomeric units issuing from an N,N-dialkyl acrylamide, the alkyl radicals each comprising from 1 to 4 carbon atoms;
- b) a molar proportion greater than or equal to 0.05% and less than or equal to 1% of monomeric units issuing from a monomer of formula (I):
CH₂=C(R₁)-C(=O)-O-[(CH₂-CH(R₂)-O]ₙ-R₃ (I)
in which n represents a number between 1 and 50, R₁ represents a hydrogen atom or a methyl radical, R₂ represents a hydrogen atom, a methyl radical or an ethyl radical and R₃ a hydrocarbon aliphatic radical, linear or branched, saturated or unsaturated, comprising from 8 to 30 carbon atoms, and
- c) optionally a molar proportion greater than 0% and less than or equal to 24% either of monomeric units issuing from a monomer comprising a free strong acid function, partially or totally salified, or of monomeric units issuing from a monomer of formula (II):
CH₂=C(R₄)-C(=O)-Y-[(CH₂)ₘ-N(R₅)(R₆) (II)
in which m represents a number between 1 and 4, Y represents O or NH, R₄ represents a hydrogen atom or a methyl radical, R₅ and R₆, identical or different, represent a methyl radical or an ethyl radical, and
- d) optionally a molar proportion greater than 0% and less than or equal to 1% of a diethylene or polyethylene crosslinking monomer.

2. Polymer as defined in claim 1, in which the monomeric units issuing from said N,N-dialkyl acrylamide issue from N,N-dimethyl acrylamide or N,N-diethyl acrylamide.

3. Polymer as defined in either claim 1 or claim 2, in which the monomeric units issuing from said monomer of formula (I) issue from:
- pentacosaethoxylated behenyl methacrylate, or
- eicosaethoxylated stearyl methacrylate.

4. Polymer as defined in any of claims 1 to 3, **characterised in that**, when it comprises monomeric units issuing from said monomer comprising a free strong acid function, partially or totally salified, these issue from 2-methyl 2-[(1-oxo 2-propenyl) amino] 1-propanesulfonic acid, free, partially or totally salified.

5. Polymer as defined in any of claims 1 to 3, **characterised in that**, when it comprises monomeric units issuing from said monomer of formula (II), these issue from:
- dimethyl amino ethyl methacrylate, or
- N-[3-(dimethylamino propyl)] acrylamide.

6. Polymer as defined in any of claims 1 to 3, comprising, for 100 molar:
- a) a molar proportion greater than or equal to 99% and less than or equal to 99.9% of monomeric units issuing from said N,N-dialkyl acrylamide; and
- b) a molar proportion greater than or equal to 0.1% and less than or equal to 1% of monomeric units issuing from a monomer of formula (I'):
CH₂=C(CH₃)-C(=O)-O-[(CH₂-CH₂-O]_{n'}-R'₃ (I')
in which n' represents a number between 4 and 25, and R₃ represents a linear or branched alkyl, saturated or unsaturated, comprising from 12 to 22 carbon atoms.

7. Polymer as defined in claim 4, comprising, for 100% molar:
- a) a molar proportion greater than or equal to 80% and less than or equal to 95% of monomeric units issuing from said N,N-dialkyl acrylamide;
- b) a molar proportion greater than or equal to 0.1% and less than or equal to 0.5% of monomeric units issuing from a monomer of formula (I'):
CH₂=C(CH₃)-C(=O)-O-[(CH₂-CH₂-O]_{n'}-R'₃ (I')
in which n' represents a number between 4 and 25, and R₃ represents a linear or branched alkyl, saturated or unsaturated, comprising from 12 to 22 carbon atoms, and
- c) a molar proportion greater than or equal to 4% and less than or equal to 19% of monomeric units issuing from 2-methyl 2-[(1-oxo 2-propenyl) amino] 1-propanesulfonic acid, free, partially or totally salified.

8. Polymer as defined in claim 5, comprising, for 100% molar:
- a) a molar proportion greater than or equal to 80% and less than or equal to 95% of monomeric units issuing from said N,N-dialkyl acrylamide;
- b) a molar proportion greater than or equal to 0.1% and less than or equal to 0.5% monomeric units issuing from said monomer of formula (I'):
CH₂=C(CH₃)-C(=O)-O-[(CH₂-CH₂-O]_{n'}-R'₃ (I')
in which n' represents a number between 4 and 25, and R₃ represents a linear or branched alkyl, saturated or unsaturated, comprising from 12 to 22 carbon atoms, and
- c) a molar proportion greater than or equal to 4% and less than or equal to 19% of monomeric units monomeric units issuing from dimethylamino ethyl methacrylate or N-[3-dimethylamino propyl)] acrylamide.

9. Method for treating a surface consisting in whole or in part of a hydrophobic material, **characterised in that** it comprises:
- a step a) during which a hydro-organic or organic aqueous solution of the polymer as defined in any of claims 1 to 8 is put in contact with said surface and is left incubated;
- a step b) of rinsing said surface resulting from step a), in order to eliminate said non-adsorbed polymer on the surface of said surface;
- optionally, a step c) of drying said rinsed surface resulting from step b).

10. Method as defined in claim 9, in which said surface consisting in whole or in part of a hydrophobic material is a surface of a chip, of a microfluidic system, of a microsystem or of a laboratory-on-chip.

11. Method as defined in one of claims 9 or 10, **characterised in that** it comprises a step d), prior to step a), a step of moulding or etching, so as to create, on said surface consisting in whole or in part of a hydrophobic material, channels having in one direction at least one dimension less than 1 mm.

12. Use of the polymer as defined in any one of claims 1 to 8 as an agent for modifying interactions between the species contained in a hydro-organic or organic aqueous solution with a surface consisting in whole or in part of a hydrophobic material.

13. Organic or hydro-organic aqueous solution containing a branched or crosslinked linear polymer as defined in any of claims 1 to 8, at a concentration by weight of between 10⁻⁴% and 10%.

14. Kit comprising:
a) at least one container comprising the branched or crosslinked linear polymer as defined in any of claims 1 to 8, and
b) at least one container comprising the liquid base suitable and intended for preparing said organic or hydro-organic aqueous solution containing said branched or crosslinked linear polymer.
